# EUROPEAN PATENT SPECIFICATION

(11) **EP 0 547 767 B1**
(45) Date of publication and mention of the grant of the patent: **19.06.1996**
(21) Application number: 92310505.0
(22) Date of filing: 18.11.1992
(51) Int. Cl.: H02K 1/27

(54) **A rotor for rotary electrical machinery**
Läufer für elektrische Drehmaschinen
Rotor pour machines électriques rotatives

(30) Priority: 21.11.1991 JP 95299/91
(43) Date of publication of application: 23.06.1993
(73) Proprietor: MABUCHI MOTOR KABUSHIKI KAISHA, Matsudo-shi, Chiba-ken (JP)
(72) Inventor: Lee, Takanobu, Mabuchi Motor Kabushiki Kaisha, Matsudo-shi, Chiba-ken (JP); Take, Masao, Mabuchi Motor Kabushiki Kaisha, Matsudo-shi, Chiba-ken (JP); Matsushita, Ikuo, Mabuchi Motor Kabushiki Kaisha, Matsudo-shi, Chiba-ken (JP); Mifune, Masahiro, Mabuchi Motor Kabushiki Kaisha, Matsudo-shi, Chiba-ken (JP)
(74) Representative: Hitchcock, Esmond Antony

(56) References cited:
- DE-A- 3 021 396
- FR-A- 1 247 394
- GB-A- 2 007 146
- PATENT ABSTRACTS OF JAPAN, vol. 16, no. 52 (E-1164) 10 February 1992 ; & JP-A-32 53 249
- PATENT ABSTRACTS OF JAPAN, vol. 12, no. 65 (E-586)(2912) 27 February 1988 ; & JP-A-62 207 158
- PATENT ABSTRACTS OF JAPAN vol. 3, no. 96 (E-130) 15 August 1979 ; & JP-A-54 073 219

## Description

This invention relates to rotors for rotary electrical machinery, including stepping motors. It particularly relates to such rotors using as a constituent element a so-called bonded magnet made of a mixture comprising ferromagnetic material powder and a binder resin therefor.

Known prior rotor constructions of the above type are formed integrally with the bonded magnet moulded around a shaft in a single exercise. While this is an efficient method, there are significant difficulties in ensuring that the shaft is properly aligned within the magnet member. The present invention addresses these problems.

In the rotor configuration described in Japanese Specification No. 3,253,249, a permanent magnet is fixed to a motor rotor by means of a pair of retainers press-fitted to the ends of the magnet. Each retainer consists of a tubular portion and circular collar at one end thereof. The tubular portion is fitted between the magnet and the shaft, whilst the circular collar engages a recess in the end face of the magnet.

Japanese Specification No. 54,073,219 describes a rotor for a step motor wherein the rotor magnet is mounted on a rotor seat which in turn is fitted to the rotor shaft. The seat extends for the axial length of the magnet, and the opposing surfaces of the seat and the magnet are non-circular in cross-section.

As with known prior arrangements, in a rotor of the present invention a permanent-magnet member comprising a mixture of ferromagnetic material powder and a binder is mounted on a shaft. A recess is formed in at least an end face of the member. However, according to the invention, the projected contour of the recess on a plane perpendicular to the axis of the member is non-circular, and the shaft is press-fitted into an opening in a metallic bush fitted to the recess. The projected contour of the bush matches that of the recess to ensure accurate fitment thereof, and the opening in the bush is aligned with the axis of the permanent magnet member. Normally, a second recess is formed in an opposite end face, either in the body of the permanent magnet member or in a central boss thereof. A typical permanent-magnet member has the form of a cylinder with a central boss which can extend from a closed end of the cylinder and/or be coupled to the cylinder by radially extending ribs. Using these techniques can achieve an excellent degree of coaxiality between the permanent-magnet member and the shaft, good workability and low overall manufacturing cost.

An example of the prior art, and some embodiments of the present invention, will now be described with reference to the accompanying drawings wherein:
Figures 1 and 2 are a perspective view and a longitudinal sectional view of a known rotor for rotary electrical machinery;
Figure 3 is a perspective view of a first embodiment of the present invention;
Figure 4 is an exploded perspective view of the rotor shown in Figure 3; and
Figures 5 to 7 are a longitudinal sectional view, and opposite end views of a second embodiment of the present invention.

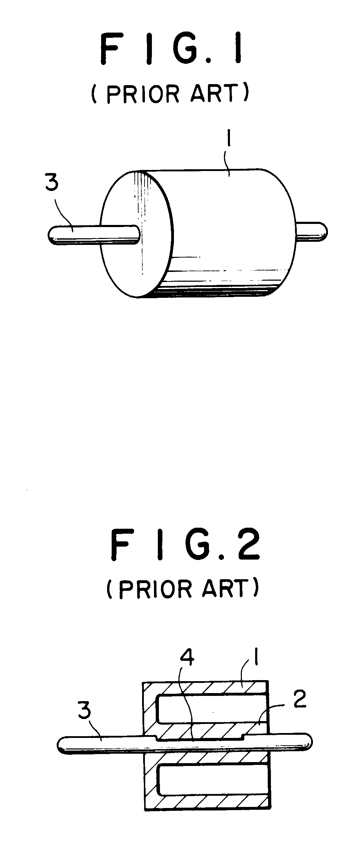

A known construction of rotor for rotary electrical machinery using as a constituent element a bonded magnet will first be described with reference to Figures 1 and 2. A permanent-magnet member 1 comprising a mixture of ferrite powder and a binding resin is shaped into the form of a bottomed hollow cylinder. It is formed with a boss 2 to which a shaft 3 is concentrically fixed. On the outer circumferential surface of the permanent-magnet member 1 are a plurality of axially extending magnetic poles (not shown).

The rotor of Figures 1 and 2 can be efficiently formed as an integral construction by injection moulding. The shaft 3 is placed in a moulding metal die of the required shape, into which a mixture of ferrite powder and a binder resin is charged to integrally mould the shaft 3 in the boss 2. In such a process, a criss-cross or axially parallel knurling pattern can first be provided on the outer periphery of the shaft 3 where it extends within the boss 2 to establish a key. In an alternative, so-called D-cutting (the cross-section of the shaft is machined into a D shape) is performed. A flat part 4 is provided on part of the outer circumferential surface of the shaft 3, which ensures a firm grip, and prevent the slipping, axial displacement or detachment of the shaft 3 after moulding due to the difference in thermal expansion coefficients of the binder resin and the shaft.

The shaft 3 and the permanent-magnet member 1 should preferably be perfectly coaxial. Axial misalignment, if any, should be reduced to the minimum. Too large a misalignment results in excessive variation in the gap between the rotor and the stator in the rotary machine, leading to the deterioration in performance. It is extremely difficult to completely eliminate axial misalignment; that is, to obtain perfect coaxiality.

To couple the permanent-magnet member 1 and the shaft 3 integrally by injection moulding, as described above, the shaft 3 must first be placed in a metal mould. In doing so, a gap is needed between a shaft insert hole and the shaft 3 in the metal mould. This gap cannot be eliminated. As a consequence, the shaft 3 can shift laterally in the hole, or become inclined relative to the predetermined axial line. Even if the shaft 3 is initially in proper alignment with the axial line, it can shift therefrom as a compound forming the permanent-magnet member 1 is injected or poured into the mould by the pressure of the compound.

While the gap between the shaft insert hole and the shaft 3 in the mould can be made extremely small to minimise or prevent the misalignment or inclination of the shaft 3, this can render difficult the placement of the shaft 3 in the mould, and the extraction of the moulded product. This substantially reduces moulding efficiency. Further, if the specification of the shaft 3 is changed, the mould must be replaced with a new one even when the permanent-magnet member 1 is the same in shape and size. The result is increased mould manufacturing cost, and additional work for mould replacement. This lowers the ratio of the moulding of the rotor proper to the entire moulding work, including tooling, leading to increased cost. The aforementioned machining, such as knurling, to prevent the shaft 3 from slipping, displacement and falling, also increases manufacturing costs. The need to use soft materials to facilitate this machining inevitably reduces mechanical strength.

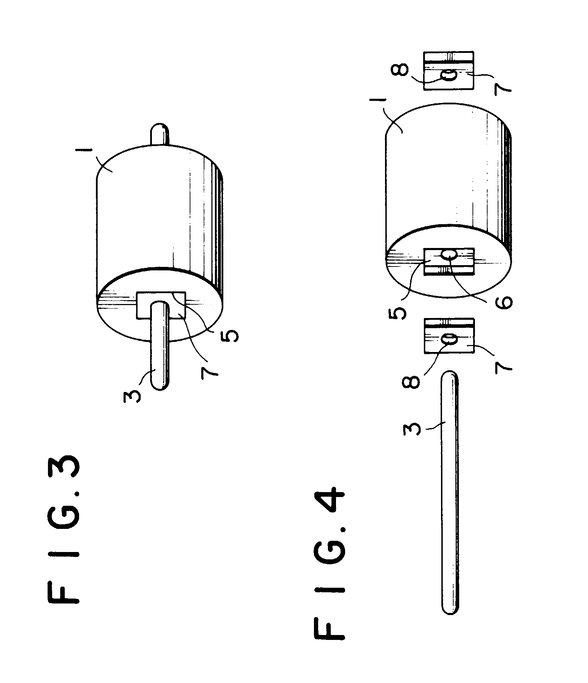

In the first embodiment of the invention shown in Figures 3 and 4, recesses 5 are provided coaxially on both end faces of the permanent-magnet member 1, which can itself be formed by injection moulding. The recesses 5 are square in the projected contour on a plane orthogonally intersecting the axial line of the permanent-magnet member 1. A through-hole 6 formed coaxially in the permanent-magnet member 1 has a cross-section diameter slightly larger than that of the shaft 3, or one which provides a certain press-fit allowance.

A metallic bush 7 is made of sheet metal, for example, and formed by pressing or punching means into a quadrangular, normally square shape in outside contour, of a size which matched the recess 5, and has a central hole 8. It will be understood that any suitable complementary non-circular shapes can be used for the bush and recess, such as rectangular, triangular, polygonal, elliptical and other geometric shapes provided shifting of the shaft can be prevented. The inside diameter of the hole 8 is made slightly smaller than the outside diameter of the shaft 3 to provide a reliable press-fit so that for example, the resistance to detachment of the shaft 3 can be maintained at over 20 kgf, for example. The shaft 3 has a substantially uniform cross-section along its overall length.

The rotor of Figures 3 and 4 is assembled by press-fitting the metallic bushes 7 into the recesses 5 on both end faces of the permanent-magnet member 1, and then press-fitting the shaft 3 simultaneously into the bushes 7 and the hole 8. Since the metallic bushes 7 are shaped to match the recesses 5, coaxiality between the permanent-magnet member 1 and the hole 8 can be substantially assured. As the assembly also substantially locks the shaft 3 to the magnet member 1, the slipping, axial misalignment or detachment of the shaft 3 is effectively inhibited.

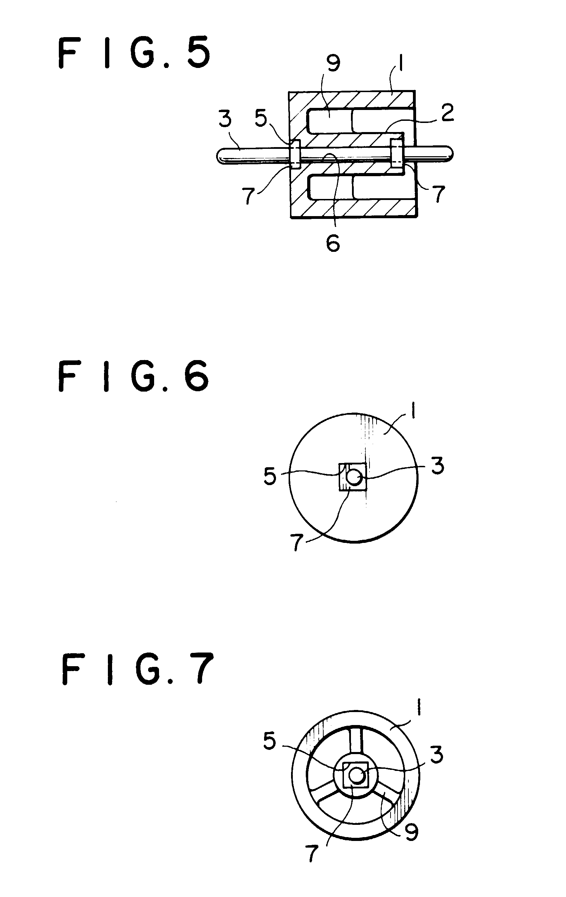

In the embodiment of the invention shown in Figures 5 to 7, the permanent-magnet member 1 is formed onto a bottomed hollow cylinder and has ribs therein. The construction of this embodiment is the same as the embodiment shown in Figures 3 and 4, except that the recesses 5 are provided on the bottom end face of the permanent-magnet member 1 and on the end face of the boss 2. Consequently, the method of assembly, the maintenance of coaxiality between the permanent-magnet member 1 and the shaft 3, and the prevention of the slipping, axial misalignment or detachment of the shaft 3 are also the same.

The above description has referred to the use of ferrite powders as the most commonly used materials for the permanent-magnet material. Needless to say, known ferromagnetic materials other than ferrite, such as SM-Co or Nd-Fe-B and other rare-earth magnet materials having excellent magnetic properties may also be used. Any suitable resin material, such as nylon, may be used as the binder. Although injection moulding has been described for the creation of the magnet member 1, other moulding techniques may be used. The invention may also be applied to anisotropic bonded magnets manufactured in a magnetic field.

The present invention offers the following specific benefits:
(1) Since the permanent-magnet member can be moulded separately with the recess or recesses, moulding efficiency can be increased and the coaxiality of the permanent-magnet member with respect to the shaft can be substantially improved.
(2) Metal moulds for the magnet member need not be changed even for different lengths of shaft. This can substantially improve productivity particularly in production runs in which small quantities of a wide variety of products are manufactured.
(3) The shaft can be formed with a uniform cross-section, and the knurling or D-cutting of the shaft as practiced in the prior art is no longer required. This leads to reduced machining cost.
(4) Since no additional machining of the shaft is needed, the material of the shaft can be selected freely, and even high-strength materials can be used.
(5) The shaft can be fitted to the permanent-magnet member by press-fitting into the non-circular metallic bush. The slipping, axial displacement or detachment of the shaft can be substantially prevented.

## Claims

1. A rotor for rotary electrical machinery in which a permanent-magnet member (1) comprising a mixture of ferromagnetic material powder and a binder is mounted on a shaft (3), and a recess (5) is formed in at least an end face of the member (1) CHARACTERISED IN THAT the projected contour of the recess (5) on a plane perpendicular to the axis of the member (1) is non-circular, and the shaft (3) is press-fitted in an opening in a metallic bush (7) fitted to the recess (5), the projected contour of the bush (7) matching that of the recess (5) to ensure accurate fitment thereof, and the opening (8) in the bush being aligned with the axis of the permanent magnet member (1).

2. A rotor according to Claim 1 wherein the permanent-magnet member (1) has a substantially columnar shape.

3. A rotor according to Claim 1 wherein the permanent-magnet member (1) is formed into a hollow cylinder with a central boss (2) coupled thereto by a plurality of radially extending ribs (9).

4. A rotor according to any preceding Claim wherein the permanent-magnet member (1) is formed into a hollow cylinder with a closed end and a central boss (2) projecting therefrom within the cylinder.

5. A rotor according to Claim 3 or Claim 4 wherein a said recess is formed at both axial ends of the boss.

6. A rotor according to any preceding Claim wherein said projected contour of the recess (5) is substantially quadrangular.

## Patentansprüche

1. Ein Läufer für elektrische Drehmaschinen, bei welchem ein Permanentmagnet (1), der aus einem Gemisch aus ferromagnetischem Pulvermaterial und einem Binder besteht, auf einer Welle (3) montiert ist, und eine Aussparung in mindestens einer Seitenfläche des Gliedes (1) ausgeführt ist,
**dadurch gekennzeichnet**,
daß der projizierte Umriß der Aussparung (5) auf einer senkrecht zur Achse des Gliedes (1) stehenden Fläche nicht kreisförmig ist, und die Welle (3) in eine Öffnung in einer metallischen Buchse (7) eingepreßt ist, die in die Aussparung (5) eingepaßt ist, wobei der projizierte Umriß der Buchse (7) zu demjenigen der Aussparung (5) paßt, um deren korrekte Anpassung zu gewährleisten, und die Öffnung (8) in der Buchse mit der Achse des Permanentmagnetgliedes (1) ausgerichtet ist.

2. Ein Läufer nach Anspruch 1, wobei das Permanentmagnetglied (1) eine im wesentlichen zylindrische oder säulenartige Form aufweist.

3. Ein Läufer nach Anspruch 1, wobei das Permanentmagnetglied (1) als Hohlzylinder mit einem mittigen Fortsatz (2) ausgeführt ist, der daran durch eine Mehrzahl sich strahlenförmig erstreckender Rippen (9) gekoppelt ist.

4. Ein Läufer nach einem der vorhergehenden Ansprüche, wobei das Permanentmagnetglied (1) als Hohlzylinder mit einer geschlossenen Seite ausgeführt ist, und mit einem mittigen Fortsatz (2), der von dort in den Zylinder hineinreicht.

5. Ein Läufer nach Anspruch 3 oder 4, wobei die Aussparung an beiden Achsseiten des Fortsatzes ausgeführt ist.

6. Ein Läufer nach einem der vorhergehenden Ansprüche, wobei der projizierte Umriß der Aussparung (5) im wesentlichen quadratisch ist.

## Revendications

1. Rotor pour machine électrique rotative, dans lequel un élément à aimant permanent (1) comprenant un mélange de poudre d'un matériau ferromagnétique et un liant est monté sur un arbre (3), et dans lequel un évidement (5) est ménagé dans au moins une face d'extrémité de l'élément (1), **CARACTERISE EN CE QUE** le contour en saillie de l'évidement (5) sur un plan perpendiculaire à l'axe de l'élément (1) est non circulaire, et l'arbre (3) est monté en ajustement serré dans l'ouverture d'une douille métallique (7) adaptée sur l'évidement (5), le contour en saillie de la douille (7) épousant celui de l'évidement (5) assurant ainsi un ajustement précis, et l'ouverture (8) dans la douille est alignée sur l'axe de l'élément à aimant permanent (1).

2. Rotor selon la revendication 1, dans lequel l'élément à aimant permanent (1) a sensiblement une forme colonnaire.

3. Rotor selon la revendication 1, dans lequel l'élément à aimant permanent (1) est formé dans un cylindre creux avec un bossage central (2) accouplé à celui-ci par plusieurs nervures s'étendant radialement (9).

4. Rotor selon l'une quelconque des revendications précédentes, dans lequel l'élément à aimant permanent (1) est monté dans un cylindre creux avec une extrémité fermée et un bossage central (2) faisant saillie à partir de celui-ci à l'intérieur du cylindre.

5. Rotor selon la revendication 3 ou la revendication 4, dans lequel l'évidement est ménagé au niveau des deux extrémités axiales du bossage.

6. Rotor selon l'une quelconque des revendications précédentes, dans lequel le contour en saillie de l'évidement (5) est sensiblement quadrangulaire.
